# EUROPEAN PATENT APPLICATION

(11) **EP 1 865 118 A2**
(43) Date of publication of application: **12.12.2007**
(21) Application number: 07290715.7
(22) Date of filing: 08.06.2007
(51) Int. Cl.: E04B 1/41, E04B 1/04

(54) **Panel connection system**

(30) Priority: 09.06.2006 AU 2006903148; 31.08.2006 AU 2006904748; 12.04.2007 AU 2007201612
(71) Applicant: ITW Construction Products Australia PTY Ltd., Oakleigh VIC 3166 (AU)
(72) Inventor: Coumaros, Andrew, Lower Templestowe, Victoria 3107 (AU)
(74) Representative: Bloch, Gérard

(57) **Abstract**

A connection system for connecting two precast wall panels after erection comprises channels cast into the two panels and a connection plate applied after erection and bolted into locking plates slidable within the channels to permit a degree of adjustment. The connection between the locking plate and the channels ensures that the plate cannot rotate and thereby slip under high cantilever loading which can arise when one of the two panels is a suspended panel with its lower edge raised from the ground.

## Description

The present invention relates to a system for connecting precast concrete wall panels following erection of the panels.

In the construction of buildings using precast concrete wall panels it is necessary to form a connection between adjacent panels which are erected in edge-to-edge relation to form a longer wall. Conventionally, such a connection is made by incorporating into each panel at the time of casting a metal connector pad which is exposed to the surface of the wall panel but slightly recessed from the surface. After erection, a metal connector plate is applied to the adjacent connector pads of two adjacent panels so as to span the two pads, and the plate is connected to the two pads by welding. Although this welded connection is, functionally, satisfactory it is however relatively expensive as it is necessary not only to employ skilled welders but also it is necessary to have on site the necessary lifting equipment to raise the welders with their welding equipment to the upper part of the wall where the connection is made.

According to the present invention there is provided a connection system for connecting two adjacent precast wall panels in an erected state, the system comprising two channels each adapted to be incorporated into a respective one of the panels during casting, with the open side of the channel opening onto a face of the panel, a locking plate held captive within each channel for movement along the channel, a connection plate to be applied between the two channels, and bolts to extend between the connection plate and the locking plates to lock the locking plates within the channels and to lock the connection plates thereto whereby to secure the connection.

Further according to the present invention there is provided a connection system for connecting two adjacent precast wall panels in an erected state, the system comprising two channels each adapted to be incorporated into a respective one of the panels during casting, with the open side of the channel opening onto a face of the panel, each channel having at its open side a pair of inturned lips with a locking plate being held captive within the channel by the lips, the locking plate being movable along the channel and having one or more threaded apertures spaced along its length, the connection system further comprising a connection plate to be applied between the two channels and apertured to receive bolts to extend between the lips of the channels into threaded engagement with the apertures in the locking plates.

Although in most situations one of the two channels will be installed into its associated panel to extend substantially vertically and the other will be installed into its associated panel to extend substantially horizontally, it is envisaged that in some circumstances both could be installed substantially vertically or substantially horizontally.

In a preferred embodiment of the invention, each locking plate includes a locking formation, for example of toothed form, to lock against the underside of the inturned lips of the channel when the bolt is tightened. The underside of the lips may be toothed or be provided with other locking formation to lock with the teeth of the plate or to better facilitate a locking effect if the plate does not include a locking formation.

Particularly advantageously, the system includes means for substantially preventing rotation of the connection plate in a vertical plane when the system is under cantilever loading as may occur when connecting a suspended wall panel with its lower edge raised from the ground. In one form this can be achieved by spaced lugs extending from the connection plate to fit closely between the inner edges of the inturned lips of one or other of the two channels. In another form this can be achieved by the use of shouldered bolts with an enlarged diameter shank section leading to a smaller diameter threaded end section and which is a close fit with the apertures in the connection plate and between the inner edges of the inturned lips of the channels.

In a variation, to take up any play between the bolts and the apertures in the connection plate arising from manufacturing tolerances, the annular zone surrounding the respective apertures is deformed outwardly whereby the edge of the aperture is shaped to form a conical seat to engage a correspondingly shaped tapered shoulder on the shank of the bolt immediately adjacent the head of the bolt. Upon tightening of the bolt, the raised zone is deformed back into substantial planar relationship with the adjacent parts of the plate whereby the seat grips tightly onto the tapered shoulder.

This form of connection has applicability also to a wider range of connection situations beyond that of the panel-to-panel connection system defined above. Accordingly, in accordance with a further inventive aspect there is provided a bolted connection system, comprising a bolt having a tapered shoulder adjacent its head and engageable with a conically shaped seat in a component to be secured by the bolt, the seat being formed by deforming outwardly from the component an annular zone immediately surrounding an aperture formed through the component for the bolt such that the deformation transforms the edge of the hole into conical form whereby upon tightening of the bolt, the annular zone is deformed back into substantial planar relationship with the adjacent part of the component and the seat grips tightly onto the tapered shoulder.

In a modified version of the system, one of the two channels, preferably the one which extends substantially horizontally in its associated panel, is replaced by a pair of internally threaded ferrules cast into the panel.

Accordingly, according to a further aspect of the present invention there is provided a connection system for connecting two adjacent precast wall panels in an erected state, the system comprising a channel adapted to be incorporated into one of the panels during casting, with the open side of the channel opening onto a face of the panel, a locking plate held captive within the channel for movement along the channel, internally threaded ferrules adapted to be incorporated into the other panel during casting, a connection plate to extend between the two panels, and bolts to couple the connection plate to the locking plate and the internally threaded ferrules so as to secure the connection.

Embodiments of the invention will now be described by way of example with reference to the accompanying drawings in which:
Figure 1 is a perspective view of a cast-in channel and an inserted locking plate of a connection system in accordance with an embodiment of the invention;
Figure 2 shows schematically the connection system installed to two erected panels so as to connect the panels;
Figure 3 is a perspective view showing the locking plate in greater detail;
Figure 4 is a perspective view showing the two channels and a connection plate configured to lock into the vertical channel to prevent rotation under cantilever loading;
Figure 5 is a view similar to Figure 4 but showing an alternative connection plate configured to lock into the horizontal channel to prevent rotation under cantilever loading;
Figure 6 is a cross-section of a connection system using shouldered bolts to engage into the channels to prevent rotation under cantilever loading;
Figure 7 is a section similar to Figure 6 but showing the system in its connected state;
Figure 8 is a cross-section of an alternative connection system using shouldered bolts in co-operation with a raised zone deformed out of the connection plate;
Figure 9 is a schematic plan view showing the raised zone;
Figure 10 is a cross-section similar to Figure 8 but showing the configuration when the bolt has been tightened;
Figure 11 shows principal components of a modified form of the connection system in which one of the two channels is replaced by a pair of cast-in ferrules; and
Figure 12 shows schematically the connection system of Figure 11 installed to two erected panels.

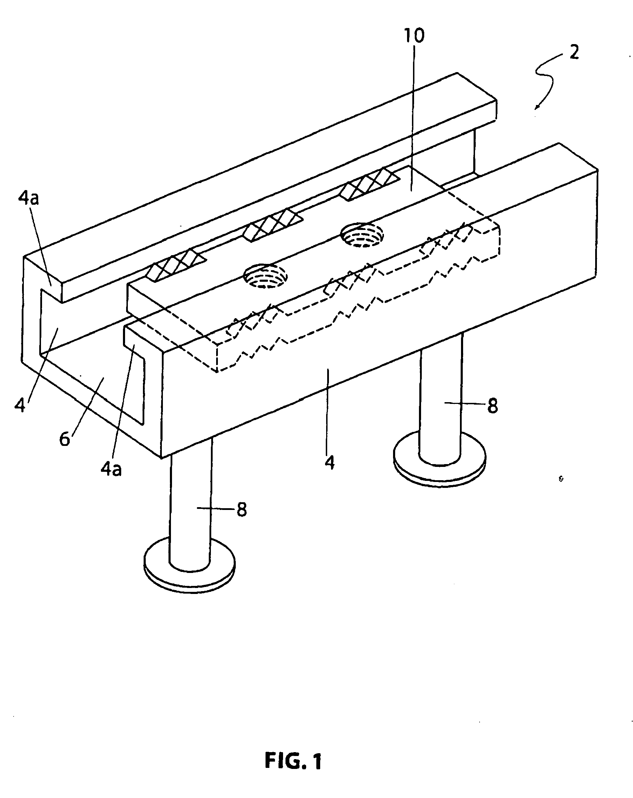

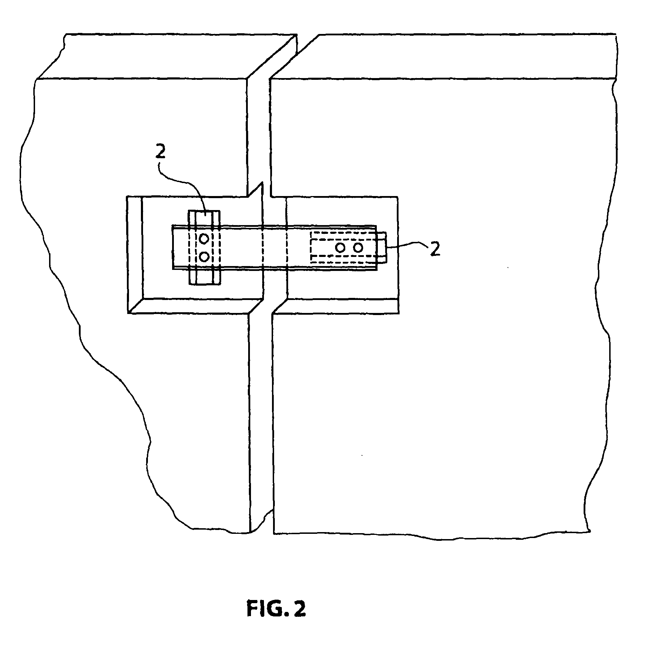

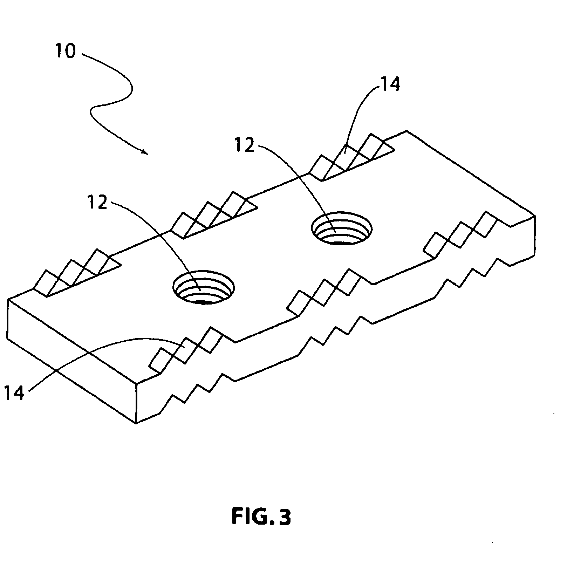

The connection system in accordance with a preferred embodiment of the invention comprises two channels 2 each cast into the face of a respective one of the two panels adjacent an edge thereof. The two channels 2 are identical and are as shown in Figure 1. The side walls 4 of the channel each have an inturned lip 4a which overlies the channel base 6. Anchoring legs 8 depending from the base 6 serve to anchor the channel within the panel during casting. One of the two channels 2 is installed within its associated panel P so as to extend vertically and the other channel 2 is installed within its associated panel P so as to extend horizontally (see Figure 2). Located within each of the channels 2 is a locking plate 10 (shown in detail in Figure 3) which is held within the channel 2 captive beneath the inturned lips 4a and able to slide along the length of the channel. The plate 10 includes threaded apertures 12 for receiving bolts associated with the connection, and teeth 14 engageable against the underside of the lips 4a when the bolts are tightened, in order to lock the plate 10 in the channel 2 against longitudinal movement. Preferably, the lips 4a include at their underside teeth (not shown) to lock with those on the plate 10. The locking plate 10 is mounted within the channel 2 prior to casting of the channel into the panel.

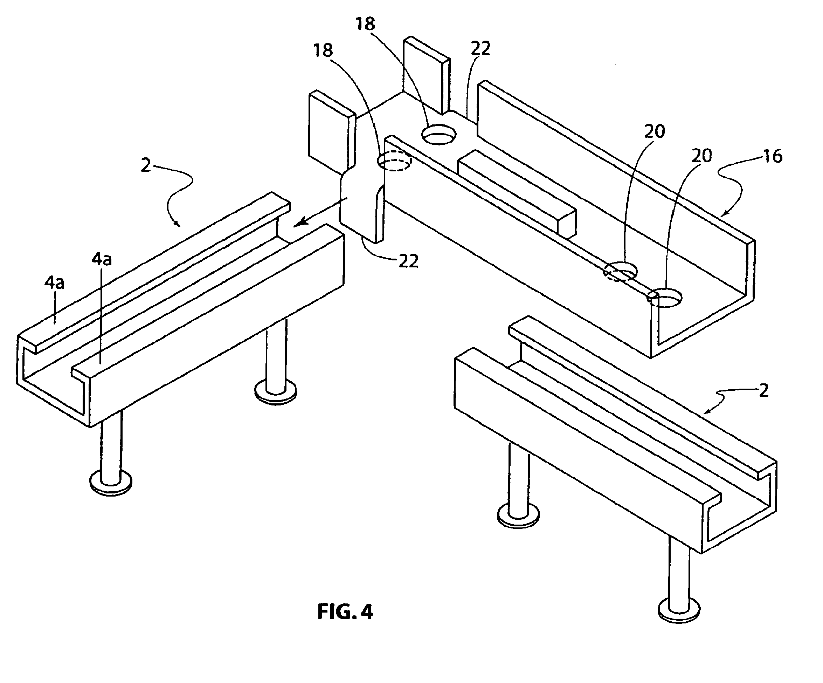

Following erection of the two panels a connection plate 16 is applied between the two channels 2. The connection plate 16 which is shown in detail in Figure 4, is provided with a pair of apertures 18 vertically spaced to receive bolts for engagement with the locking plate 10 of the vertical channel, and a pair of apertures 20 horizontally spaced to receive bolts for engagement the locking plate 10 of the horizontal channel. The locking plates 10 have been omitted from the illustration of Figure 4. The connection plate 16 is rigid and as shown is itself of channel section to achieve added rigidity. When the connection plate 16 is applied, the adjustability of the two locking plates 10 within their respective channels, one horizontally and one vertically, enables the apertures 18, 20 in the connection plate 16 to be aligned with those 12 in the locking plates 10 to thereby permit application of bolts through the connection plate into the locking plates. In this way, the connection between the two wall panels can easily and quickly be established.

In practice, although the channels 2 open onto the face of the panel, they are recessed beneath the face by a depth sufficient to accommodate the thickness of the connection plate 16 so that the plate 16 itself will not project from the face of each of the two panels. A rectangular recess R is formed in the face of each panel (see Figure 2) and is of a size sufficient to accommodate a range of different placements of the connection plate 16 which may be needed to obtain alignment with the movable locking plates 10. When the connection has been established, the recesses R can be filled flush with the faces of the two panels. It is, however, to be understood that in some situations, the channels will not be recessed beneath the face.

In some designs of building construction, one of the two panels might not be supported at its lower edge on the ground but, rather, may be raised above the ground, for example to act in the manner of a lintel above a window or door opening. In such a situation, the connection between the panels may need to be made when the panel is still suspended from the lifting equipment used to move it into position in the structure. In that case the connection will be under a cantilever loading until such time as the next panel has been erected and the connection then made with that panel so that the raised panel is then supported at each end. When standard bolts are used to establish the connection, there will be a degree of play between the bolts and the inturned lips of the channel. Also there will be a degree of play between the sides of the locking plate and the sides of the channel. Due to the high cantilever loading which is exerted on the connection in this transient state even when the bolts are fully tightened, some downwards slippage of the unsupported free end of the raised panel can occur which can lead to difficulties in securing correct alignment with the next panel. To avoid, or at least to substantially minimise this effect, means are preferably provided to positively lock the connection plate in order to substantially prevent any swinging movement of the plate in a vertical plane under the effect of cantilever loading.

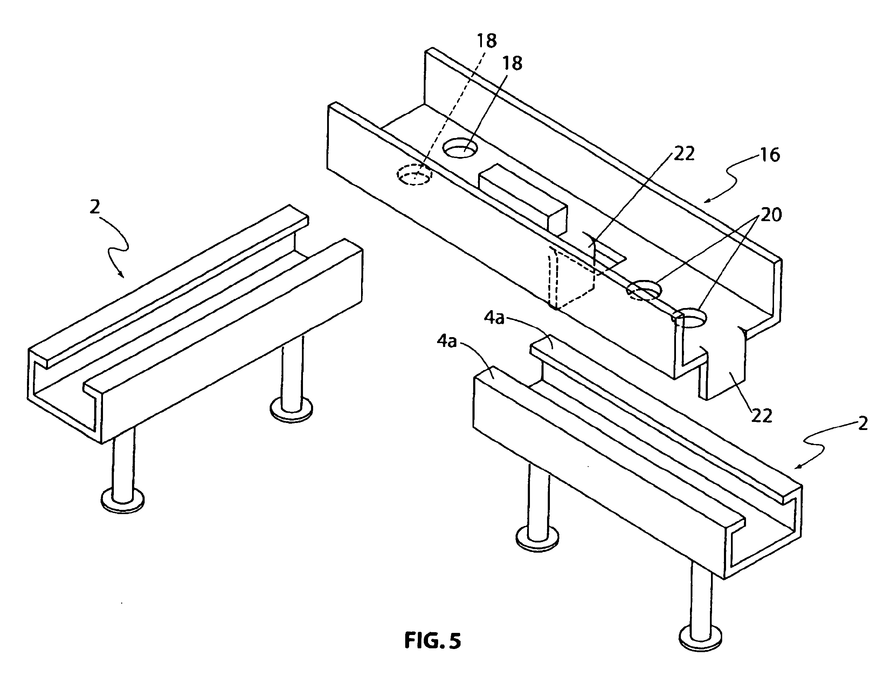

In the embodiment shown in Figure 4, rotational locking of the connection plate 16 is achieved by a pair of lips 22 extending from the base of the connection plate 16 in alignment with the two vertical apertures 18 to engage with a close fit between the inner edges of the inturned lips 4a of the vertical channel 2. In an alternative as shown in Figure 5, the two lips 22 are in alignment with the horizontal apertures 20 in the connection plate 16 and engage with a close fit between the inner edges of the inturned lips 4a of the horizontal channel 2. In either case, when under cantilever loading, the lips 22 on the connection plate will engage with the inner edges of the inturned channel lips to substantially prevent any swinging movement of the connection plate. Although, in principle, when these locking lips are used only a single bolt is needed to secure the connection plate to each of the locking plates, in practice for safety and other considerations at least two bolts will be used.

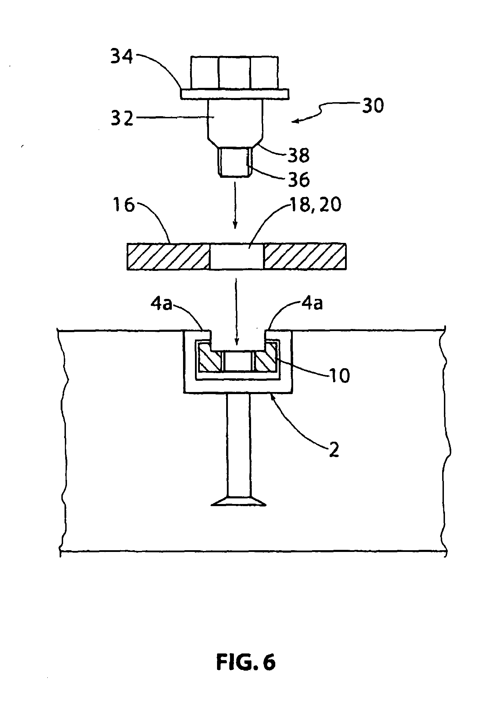

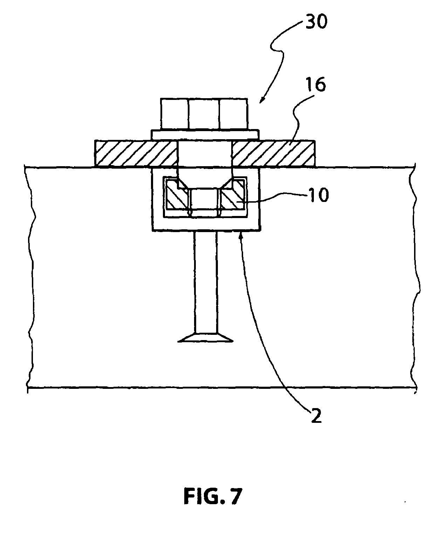

In a further alternative as shown in Figures 6 and 7, instead of using bolts of standard form in the connection, a special shouldered bolt 30 is used, the bolt having an enlarged diameter section 32 adjacent a flanged head 34. The enlarged diameter section 32 of the shank is joined to a threaded end section 36 of smaller diameter via a frustoconical transition section 38. The apertures in the connection plate 16 are sized so as to be a close fit with the enlarged diameter section 32 of the shank, and when the bolt is inserted into the aperture it is centred by means of its frustoconical transition section 38. The enlarged diameter section 32 of the shank is also a close fit between the inner edges of the inturned lips of the channel 2 and, likewise is centred between these lips during insertion by the frustoconical transition section 38. In this form, as a result of the close fit between the enlarged diameter section of the bolt shank and the connection plate and channel, swinging movement of the plate in a vertical plane under the cantilever loading is substantially prevented. In principle it would be possible to use this form of bolted connection together with the locking lips previously described for the same purpose but is envisaged that the incorporation of both forms of anti-rotation locking in a single connection is unlikely to be required.

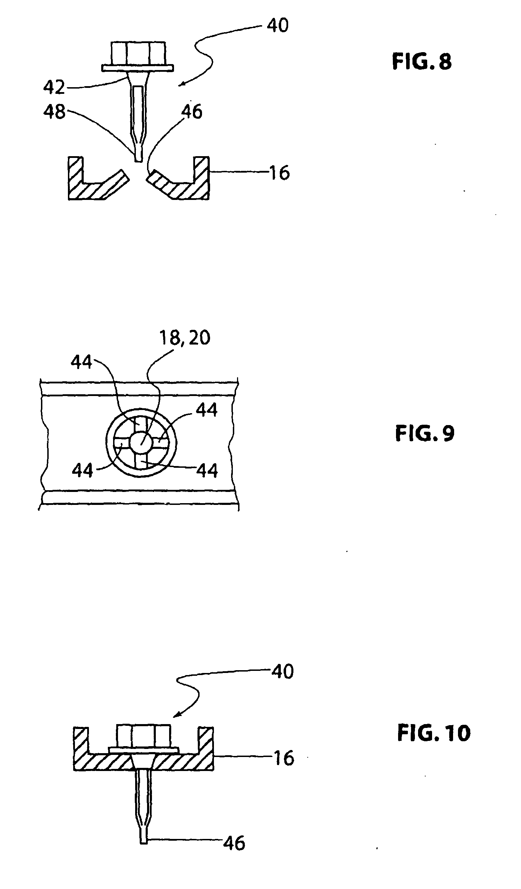

In a yet further alternative as shown in Figures 8 to 10, the connection is established by bolts 40 having a tapered shoulder 42 adjacent a flanged head to co-operate with a raised part of the connection plate 16 in the zone of each of its apertures 18, 20. This raised part is produced by forming a series of radial slots 44 in the annular zone around each aperture, and pressing that annular zone outwardly into a conical configuration whereby the circular edge of each hole forms a conical seat 46 engaged by the tapered shoulder 42 of the bolt. To facilitate insertion of the bolt through the raised, conical, seat, the bolt is preferably formed with a reduced diameter pilot portion 48 at the leading end of its shank. When the bolt is tightened, the raised conical zone is deformed back into planar relationship with the remainder of the connection plate whereby the edge of the aperture will grip and lock very tightly onto the tapered shoulder 42 (see Figure 10) to ensure that movement between the two cannot take place.

While this form of bolted connection has particular applicability in the panel connection system of the present invention, it also has general applicability in a wide range of other connection systems involving a bolted or screwed connection between one component and another in which the possibility of movement arising between the two components under a high loading needs to be avoided.

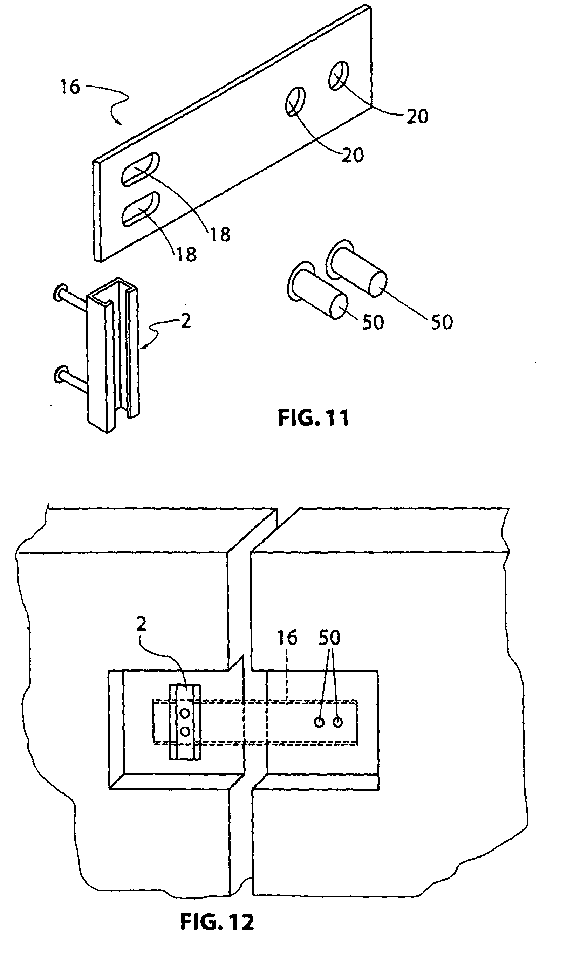

The two channels 2 of the connection system are relatively expensive to produce particularly when, as is preferred, the undersides of the inturned lips 4a are formed with teeth to lock with the teeth 14 of the locking plate 10. In a modification of the system, one of the two channels is replaced by a pair of internally threaded ferrules cast into the panel and the connection plate is bolted directly to the ferrules. This modification is illustrated Figures 11 and 12, in which the horizontal channel is replaced by two ferrules 50 horizontally spaced. To compensate for the horizontal adjustment of the connection plate 16 previously permitted by the horizontal channel, the apertures 18 for the bolts which engage into the locking plate of the vertical channel are elongated horizontally. Alternatively, the vertical channel can be replaced by the two ferrules and in that case, the apertures for the bolts which engage into the locking plate of the horizontal channel are elongated vertically.

Internally threaded ferrules for installation into a concrete component during casting are widely available and their use as in the connection system of the invention may lead to reduced costs without reducing the effectiveness of the system. Moreover, the use of the ferrules should obviate issues of play which arise between standard bolts and the inturned lips of the channel and also between the locking plate and sides of the channel, as previously discussed. Accordingly, when the two ferrules are used in place of the horizontal channel, the bolted connection between the connection plate and the ferrules may itself be sufficient to take a high cantilever loading without any slippage, without the incorporation of additional measures to achieve that effect. It is possible that the panel with the two ferrules could be supplied to a customer with the connection plate already installed to the two ferrules.

The embodiments have been described by way of example only and modifications are possible within the scope of the invention.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

## Claims

1. A connection system for connecting two adjacent precast wall panels in an erected state, the system comprising two channels each adapted to be incorporated into a respective one of the panels during casting, with the open side of the channel opening onto a face of the panel, a locking plate held captive within each channel for movement along the channel, a connection plate to be applied between the two channels, and bolts to extend between the connection plate and the locking plates to lock the locking plates within the channels and to lock the connection plates thereto whereby to secure the connection.

2. A connection system for connecting two adjacent precast wall panels in an erected state, the system comprising two channels each adapted to be incorporated into a respective one of the panels during casting, with the open side of the channel opening onto a face of the panel, each channel having at its open side a pair of inturned lips with a locking plate being held captive within the channel by the lips, the locking plate being movable along the channel and having one or more threaded apertures spaced along its length, the connection system further comprising a connection plate to be applied between the two channels and apertured to receive bolts to extend between the lips of the channels into threaded engagement with the apertures in the locking plates.

3. A system according to claim 2, wherein each locking plate includes a locking formation to lock against the underside of the inturned lips of the channel when the bolt is tightened.

4. A system according to claim 2 or claim 3, wherein the underside of the lips is provided with a locking formation to lock with the plate when the bolt is tightened.

5. A system according to any one of claims 2 to 4, including means for substantially preventing rotation of the connection plate in a vertical plane when under cantilever loading.

6. A system according to claim 5, wherein the means for substantially preventing rotation of the connection plate comprises lugs extending from the connection plate to fit closely between the inner edges of the inturned lips of one of the two channels.

7. A system according to claim 5, wherein the means for substantially preventing rotation of the connection plate comprises shouldered bolts with an enlarged diameter shank section leading to a smaller diameter threaded end section, the enlarged diameter shank section being a close fit with the apertures in the connection plate and between the inner edges of the inturned lips of the channel.

8. A system according to any one of claims 1 to 4, wherein the connection plate is configured to co-operate with one of the two channels so as to substantially prevent rotation of the connection plate relative to that channel in a vertical plane when under cantilever loading.

9. A system according to any one of claims 2 to 6, wherein an annular zone surrounding the respective apertures in the connection plate for the bolts is deformed outwardly whereby the edge of the aperture is shaped to form a conical seat to engage a correspondingly shaped tapered shoulder on the shank of the bolt immediately adjacent the head of the bolt, whereby on tightening of the bolt, the zone is deformed back into substantial planar relationship with the adjacent parts of the plate whereby the seat grips tightly onto the tapered shoulder.

10. A building structure comprising two precast wall panels connected by a system according to any one of the preceding claims, wherein one of the two channels is incorporated into one of the panels so as to extend substantially vertically in that panel and the other of the two channels is incorporated into the other panel so as to extend substantially horizontally in that panel, the channels being incorporated into the respective panels during the casting of the panels so that each channel opens onto a face of the panel.

11. A connection system for connecting two adjacent precast wall panels in an erected state, the system comprising a channel adapted to be incorporated into one of the panels during casting, with the open side of the channel opening onto a face of the panel, a locking plate held captive within the channel for movement along the channel, internally threaded ferrules adapted to be incorporated into the other panel during casting, a connection plate to extend between the two panels, and bolts to couple the connection plate to the locking plate and the internally threaded ferrules so as to secure the connection.

12. A connection system according to claim 11, wherein the locking plate and/or the channel includes a locking formation to cause positive locking of the locking plate within the channel upon tightening of the bolts.

13. A connection plate according to claim 11 or claim 12, wherein the connection plate is configured to co-operate with the channel so as to substantially prevent rotation of the connection plate relative to the channel in a vertical plane when under cantilever loading.

14. A building structure comprising two precast wall panels connected by a system according to any one of claims 11 to 13, wherein the channel is incorporated into one of the panels so as to extend substantially vertically in that panel and the internally threaded ferrules are incorporated into the other panel so as to be spaced horizontally in that panel, the channel and ferrules being incorporated into the respective panels during casting of the panels so that each opens onto a face of the panel, and the connection plate having bolt apertures elongated in a horizontal direction whereby the combined effects of the movement of the locking plate along the vertical channel and the horizontal elongation of the bolt apertures permits adjustment of the system components when establishing the connection.

15. A building structure comprising two precast wall panels connected by a system according to any one of claims 11 to 13, wherein the channel is incorporated into one of the panels so as to extend substantially horizontally in that panel and the internally threaded ferrules are incorporated into the other panel so as to be spaced vertically in that panel, the channel and ferrules being incorporated into the respective panels during casting of the panels so that each opens onto a face of the panel, and the connection plate having bolt apertures elongated in a vertical direction whereby the combined effects of the movement of the locking plate along the horizontal channel and the vertical elongation of the bolt apertures permits adjustment of the system components when establishing the connection.

16. A bolted connection system, comprising a bolt having a tapered shoulder adjacent its head and engageable with a conically shaped seat in a component to be secured by the bolt, the seat being formed by deforming outwardly from the component an annular zone immediately surrounding an aperture formed through the component for the bolt such that the deformation transforms the edge of the hole into conical form whereby upon tightening of the bolt, the annular zone is deformed back into substantial planar relationship with the adjacent part of the component and the seat grips tightly onto the tapered shoulder.

17. A connection system substantially as hereinbefore described with reference to the accompanying drawings.
